(19) Europäisches Patentamt
European Patent Office
Office européen des brevets

(11) EP 3 154 341 B1

(12) **FASCICULE DE BREVET EUROPEEN**

(45) Date de publication et mention de la délivrance du brevet:
**07.11.2018 Bulletin 2018/45**

(21) Numéro de dépôt: **15727428.3**

(22) Date de dépôt: **11.06.2015**

(51) Int Cl.:
***A01N 25/00*** *(2006.01)* ***A01N 43/16*** *(2006.01)*
***A01P 11/00*** *(2006.01)*

(86) Numéro de dépôt international:
**PCT/EP2015/063026**

(87) Numéro de publication internationale:
**WO 2015/189319 (17.12.2015 Gazette 2015/50)**

(54) **APPÂT RODONTICIDE COMPRENANT DU DIFÉNACOUM ET PROCÉDÉ DE LUTTE CONTRE DES RONGEURS CIBLES NUISIBLES**

DIFENACOUM-ENTHALTENDE ZUSAMMENSETZUNG, NAGETIER-KÖDER SOWIE VERFAHREN ZUR BEKÄMPFUNG VON NAGERSCHÄDLINGEN

DIFENACOUM CONTAINING COMPOSITION, RODENTICIDAL BAIT AND PROCESS FOR CONTROLLING TARGET RODENT PESTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2014 FR 1455437**

(43) Date de publication de la demande:
**19.04.2017 Bulletin 2017/16**

(73) Titulaire: **Vetagro-Sup**
**69280 Marcy l'Etoile (FR)**

(72) Inventeurs:
- **CARUEL, Hervé**
  **47310 Moncaut (FR)**
- **ESPANA, Bernadette**
  **69280 Marcy l'Etoile (FR)**
- **BESSE, Stéphane**
  **69340 Francheville (FR)**
- **LATTARD, Virginie**
  **69009 Lyon (FR)**
- **BENOIT, Etienne**
  **69009 Lyon (FR)**

(74) Mandataire: **Cabinet BARRE LAFORGUE & associés**
**35, rue Lancefoc**
**31000 Toulouse (FR)**

(56) Documents cités:
**EP-A1- 2 090 164 EP-A2- 0 147 052**

- **M. J. WINN ET AL: "An investigation of sex-linked differences to the toxic and to the pharmacological actions of difenacoum: studies in mice and rats", JOURNAL OF PHARMACY AND PHARMACOLOGY, vol. 39, no. 3, 1 mars 1987 (1987-03-01), pages 219-222, XP055148402, ISSN: 0022-3573, DOI: 10.1111/j.2042-7158.1987.tb06252.x**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

L'invention concerne un appât rodonticide comprenant du difénacoum et un procédé de lutte contre des rongeurs cibles nuisibles. L'invention concerne donc le domaine technique de lutte contre le développement excessif de populations de rongeurs cibles nuisibles.

Il est connu d'utiliser des pièges à rongeurs cibles nuisibles permettant de prélever un petit nombre d'individus d'une espèce de rongeur cible nuisible. On connait aussi des appâts rodonticides faisant office de poison pour des rongeurs cibles nuisibles.

On connait déjà des appâts rodonticides et des procédés permettant de lutter contre des rongeurs nuisibles. Le difénacoum a été utilisé dans ce but par exemple dans EP2090164. Un tel appât rodonticide comprend par exemple du difénacoum dans une proportion massique de 50 mg par kilogramme (0,005 %, 50 ppm) d'appât. En particulier, WO 93/01712 décrit des appâts rodonticides comprenant du difénacoum à 0,0025 % ou 0,005 % (en poids) sous forme de granulés connus sous le nom "*Klerat pellets*" et conditionnés dans un sachet en papier et imprégné de benzoate de dénatonium à titre d'agent d'amertume.

De tels appâts posent des problèmes lorsqu'ils sont mis à la disposition des populations de rongeurs nuisibles et sont susceptibles, malgré leur composition conférant un goût amer, d'être consommés par des animaux autres que des rongeurs nuisibles. Ils peuvent par exemple être consommés par des animaux domestiques, des animaux de compagnie. Ils peuvent aussi être accidentellement consommés par des humains.

En outre, une quantité importante de difénacoum de ces appâts rodonticides connus peut être ingérée par des animaux -notamment des oiseaux- prédateurs ou charognards de rongeurs nuisibles et notamment de rongeurs nuisibles affaiblis ayant consommé un tel appât rodonticide, cette consommation étant susceptible d'entrainer à terme la mort de ces animaux prédateurs ou charognards.

L'invention vise donc à pallier ces inconvénients en proposant un appât rodonticide et un procédé de lutte contre des rongeurs cibles nuisibles qui sont efficaces pour maitriser les populations de rongeurs nuisibles et qui permettent cependant de limiter les risques d'empoisonnement de l'homme et d'animaux non-cibles.

L'invention vise en particulier un tel appât rodonticide et un tel procédé de lutte contre des rongeurs cibles nuisibles qui permettent de limiter les risques d'empoisonnement d'animaux prédateurs, tels que par exemple des mammifères domestiques ou sauvages -notamment des renards- et des oiseaux prédateurs ou charognards des rongeurs nuisibles.

L'invention vise aussi un tel appât rodonticide et un tel procédé de lutte contre des rongeurs cibles nuisibles dont la mise en oeuvre est en accord avec les règles de bon usage notamment vis à vis de la protection des oiseaux, et en particulier des rapaces.

L'invention vise aussi un tel appât rodonticide et un tel procédé de lutte contre des rongeurs cibles nuisibles qui permettent de limiter les risques d'empoisonnement d'animaux domestiques et d'animaux de compagnie.

L'invention vise aussi en particulier un procédé de lutte contre des rongeurs cibles nuisibles qui ne nécessite pas d'utiliser des doses massives d'agents rodonticides et qui est respectueux de l'environnement, de la santé humaine et des animaux non cibles.

Pour ce faire, l'invention concerne un appât rodonticide comprenant :

- du difénacoum majoritairement sous forme de *trans*-difénacoum de formule 3-(biphényl-4-yl)-1-(4-hydroxycoumarin-3-yl)-1,2,3,4-tétrahydronaphtalène, dans lequel les carbones 1 et 3 du groupement 1,2,3,4-tétrahydronaphtalène sont de même configuration absolue, et ;
- un excipient comestible pour des rongeurs cibles nuisibles ; caractérisé en ce qu'il comprend une proportion de *trans*-difénacoum dans l'appât qui est supérieure à une proportion minimale de *trans*-difénacoum létale pour des femelles adultes des rongeurs cibles et inférieure à une proportion minimale de *trans*-difénacoum létale pour des mâles adultes des rongeurs cibles, ladite proportion minimale létale pour des femelles adultes étant inférieure à la proportion minimale létale pour des mâles adultes.

L'invention concerne donc un appât rodonticide vis-à-vis d'une population de rongeurs cibles nuisibles et comprenant du *trans*-difénacoum, dans lequel la proportion de *trans*-difénacoum dans l'appât est supérieure à une proportion minimale de *trans*-difénacoum létale pour des femelles adultes des rongeurs cibles et inférieure à une proportion minimale de *trans*-difénacoum létale pour des mâles adultes des rongeurs cibles, ladite proportion minimale létale pour des femelles adultes étant inférieure à la proportion minimale létale pour des mâles adultes.

L'invention concerne donc un tel appât rodonticide comprenant du difénacoum sous forme d' un stéréo-isomère, dit *trans*-difénacoum, de configuration du difénacoum, ledit *trans*-difénacoum étant de formule 3-(biphényl-4-yl)-1-(4-hydroxycoumarin-3-yl)-1,2,3,4-tétrahydronaphtalène, les carbones 1 et 3 du groupement 1,2,3,4-tétrahydronaphtalène du *trans*-difénacoum étant de même configuration absolue, et un excipient comestible pour des rongeurs cibles nuisibles.

Dans tout le texte :

- le terme général "difénacoum" désigne le 3-(biphényl-4-yl)-1-(4-hydroxycoumarin-3-yl)-1,2,3,4-tétrahydronaphtalène ou 3-(biphényl-4-yl-1,2,3,4-tétrahydro-1-naphtyl)-4-hydroxycoumarine aussi nommé 2-hydroxy-3-[3-(4-phénylphényl)-1-tétralinyl]-4-chroménone dans la nomenclature IUPAC ("*International Union of Pure and Applied Chemistry*"). Le *trans*-difénacoum est de formule (I) développée ci-après :

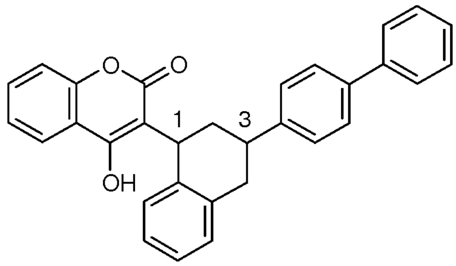

(I) ;

dans laquelle les carbones "1" et "3" du groupement 1,2,3,4 tétrahydronaphtalène sont identifiés. Dans le *trans*-difénacoum le substituant (4-hydroxycoumarin-3-yl) du carbone 1 d'une part et le substituant (biphényl-4-yl) du carbone 3 d'autre part s'étendent en "trans" par rapport au plan médian des atomes du groupement 1,2,3,4-tétrahydronaphtalène et les carbones 1 et 3 du groupement 1,2,3,4-tétrahydronaphtalène sont de même configuration absolue.
- on désigne par "stéréo-isomères", des isomères de même formule semi-développée, mais dont la position relative des atomes diffère dans l'espace. On désigne par "stéréo-isomères de configuration" les stéréo-isomères dont la conversion de l'un en l'autre des stéréo-isomères nécessite une rupture/reformation d'une liaison covalente interatomique. Ainsi, on désigne par "stéréo-isomères de configuration" les stéréo-isomères qui ne sont pas des isomères de conformation (ou "rotamères", dont la conversion de l'un en l'autre des isomères de conformation s'accompagne uniquement d'une rotation d'une partie de la molécule selon l'axe d'une liaison $\sigma$ formée par recouvrement axial d'orbitales). Un même stéréo-isomère de configuration peut être formé de l'un ou de l'autre des éventuels différents énantiomères de ce stéréo-isomère de configuration ou d'un mélange, racémique ou non, de ces éventuels énantiomères ;
- les configurations absolues des carbones 1 et 3 du groupement 1,2,3,4-tétrahydronaphtalène sont déterminées selon la nomenclature de Cahn, Ingold et Prelog ;
- on entend par "proportion minimale létale" de *trans*-difénacoum dans un appât, la proportion -notamment la proportion massique- la plus faible de *trans*-difénacoum dans ledit appât susceptible de tuer au moins un individu de la population de rongeurs cibles nuisibles par consommation dudit appât. La proportion massique minimale létale de *trans*-difénacoum d'un appât est donc la proportion (en gramme de *trans*-difénacoum par gramme d'appât) permettant de tuer au moins un individu de la population de rongeurs cibles nuisibles par consommation dudit appât par cet individu de la population de rongeurs cibles nuisibles.

On détermine la proportion de *trans*-difénacoum minimale létale pour des femelles adultes de la population de rongeurs cibles en mesurant le taux de mortalité des femelles adultes dans des lots de rongeurs cibles nuisibles consommant des appâts pendant une durée prédéterminée, les appâts étant proposés dans chacun des lots en quantité suffisante pour satisfaire l'appétit des rongeurs cibles et comprenant une proportion prédéterminée de *trans*-difénacoum. La proportion de *trans*-difénacoum minimale létale pour des femelles adultes est la proportion de *trans*-difénacoum des appâts mis à disposition et ingéré par le lot de rongeurs cibles et présentant le plus faible taux non nul de mortalité par hémorragie chez les femelles.

De façon similaire, on détermine la proportion de *trans*-difénacoum létale pour des mâles adultes de la population de rongeurs cibles en mesurant le taux de mortalité des mâles adultes dans des lots de rongeurs cibles nuisibles consommant des appâts pendant une durée prédéterminée, les appâts étant mis à disposition de chacun des lots en quantité suffisante pour satisfaire l'appétit des mâles adultes des rongeurs cibles et comprenant une proportion prédéterminée de *trans*-difénacoum. La proportion de *trans*-difénacoum est qualifiée de non létale pour les mâles adultes si les appâts proposés au lot de rongeurs cibles n'entraine aucune mortalité par hémorragie chez les rongeurs cibles mâles adultes.

Avantageusement et selon l'invention, l'excipient comestible comprend au moins un aliment choisi dans le groupe formé des graines de céréales -notamment des graines de céréale décortiquées-, des moutures de graines de céréale, des farines de graines de céréale, des flocons de graines de céréale, du son de céréales, des graines non céréalières -par exemple des graines de luzerne-, des moutures de graines non-céréalières, des farines de graines non céréalières, des flocons de graines non céréalières, du son de plantes non céréalières. L'excipient comestible peut comprendre tout aliment susceptible d'être consommé par les rongeurs cibles nuisibles.

Avantageusement et selon l'invention, l'excipient comestible est choisi pour pouvoir être consommé par des rongeurs cibles nuisibles. L'invention concerne donc un appât rodonticide qui comprend une composition comprenant majoritairement du *trans*-difénacoum dans le difénacoum et un excipient comestible apte à stimuler des rongeurs cibles nuisibles pour consommer ledit appât.

Avantageusement et selon l'invention, l'excipient comestible est non létal pour des rongeurs cibles nuisibles. En particulier l'excipient comestible n'est pas rodonticide en lui-même et est exempt de composés rodonticide. Avantageusement et selon l'invention, l'excipient comestible est choisi pour stimuler la consommation de l'appât par des rongeurs cibles nuisibles et pour permettre la consommation de l'appât par des rongeurs cibles nuisibles.

Avantageusement, l'excipient comestible comprend au moins un aliment choisi dans le groupe formé des aliments d'origine végétale et des aliments d'origine animale. Avantageusement, l'aliment est choisi dans le groupe formé de graines d'une ou de plusieurs céréales, de graines décortiquées d'une ou de plusieurs céréales, des moutures d'une ou de plusieurs céréales, des flocons d'une ou de plusieurs céréales, de son d'une ou de plusieurs céréales et des farines d'une ou de plusieurs céréales. Á titre d'exemple, on choisit l'aliment dans le groupe formé de l'avoine, du blé, de l'orge, du maïs, du soja et du riz.

Avantageusement, l'excipent comestible comprend au moins un aliment sucré. Par exemple, il peut s'agir d'un aliment comprenant au moins un sucre choisi dans le groupe formé du saccharose, du lactose, du fructose et du glucose. Il peut s'agir d'un sirop de sucre -par exemple, d'un sirop de sucre obtenu par hydrolyse de l'amidon- ou d'un sirop de sucre obtenu par hydrolyse de saccharose (sirop de sucre inverti), ou d'un sirop de sucre de betterave, ou d'un sirop d'érable, ou d'un sirop de canne à sucre, ou d'un sirop obtenu à partir d'une plante du genre *stevia*.

Avantageusement, l'excipient comestible comprend au moins un aliment de stimulation de l'appétit des rongeurs cibles nuisibles choisi dans le groupe formé des flocons et de la farine d'albumen de noix de coco (coprah).

Avantageusement, l'excipient comestible comprend au moins un aliment de stimulation de l'appétit des rongeurs cibles nuisibles choisi dans le groupe formé de noix, de noisettes et d'amandes -râpées et/ou en poudre.

Avantageusement, l'excipient comestible comprend au moins une matière grasse choisie dans le groupe formé des graisses végétales, des huiles végétales (par exemple huile de colza, graisse de soja, huile de tournesol, beurre de cacao, huile d'arachides, beurre d'arachides, huile de maïs, huile de palme), des graisses animales et des huiles animales (beurre, saindoux, huile de poisson).

Avantageusement, l'excipient comestible comprend au moins un aliment choisi dans le groupe formé des protéines animales. A titre d'exemple, on peut citer par exemple le lait en poudre -notamment le lait écrémé en poudre-, les oeufs -notamment les oeufs en poudre- et les hydrolysats de protéines animales.

Avantageusement et selon l'invention, l'appât rodonticide se présente sous forme solide. Avantageusement, l'appât rodonticide selon l'invention peut être sous forme de boulettes, de granulés, de bloc ou d'une pâte susceptibles d'être consommés par les rongeurs cibles nuisibles ou d'un matériau solide susceptible d'être rongé par les rongeurs cibles nuisibles. Avantageusement, l'appât rodonticide solide selon l'invention peut se présenter sous forme d'un bloc rigide, d'un bloc semi-rigide ou d'un gel.

Avantageusement et selon l'invention, l'appât rodonticide peut se présenter sous forme d'une poudre. En particulier, un tel appât rodonticide sous forme de poudre est adapté pour pouvoir souiller la fourrure du(de) rongeur(s) cible(s) nuisible(s) et pour pouvoir être ingérée par celui(ceux)-ci lors de son(leur) toilettage.

Avantageusement et selon l'invention, l'appât rodonticide peut aussi se présenter sous forme liquide. L'appât rodonticide est alors une boisson.

Avantageusement et selon l'invention, l'appât rodonticide comprend au moins un colorant. Un tel colorant permet en particulier de donner audit appât une couleur aisément détectable et identifiable par un utilisateur dudit appât rodonticide.

Avantageusement et selon l'invention, l'appât rodonticide comprend au moins un conservateur apte à assurer sa conservation lors de son stockage.

Avantageusement et selon l'invention, l'appât rodonticide comprend au moins un agent d'amertume -notamment une quantité de benzoate de dénatonium-.

Avantageusement, dans une variante selon l'invention, l'appât rodonticide comprend exclusivement du difénacoum à titre de substance rodonticide. En particulier, l'appât rodonticide selon l'invention est exempt de toute autre substance anticoagulante à usage rodonticide.

Cependant, dans une autre variante selon l'invention, l'appât rodonticide peut comprendre une autre substance rodonticide autre que du difénacoum et/ou toute autre substance anti-nuisible telle qu'une substance insecticide et/ou acaricide.

Avantageusement et selon l'invention, l'appât rodonticide comprend une proportion massique de *trans*-difénacoum comprise entre 1 ppm et 30 ppm -notamment comprise entre 5 ppm et 25 ppm, de préférence entre 5 ppm et 15 ppm. L'appât rodonticide selon l'invention est donc un appât rodonticide faiblement dosé en *trans*-difénacoum à titre de substance inhibitrice du complexe 1 de la vitamine K époxyde réductase (VKORC1, "*Vitamin K epoxide reductase complex subunit 1*"). On exprime la proportion (en ppm) de *trans*-difénacoum dans l'appât par la quantité -notamment

en masse- de *trans*-difénacoum rapportée à la quantité -notamment une masse- d'appât.

Avantageusement et selon l'invention, lorsque les rongeurs cibles nuisibles sont choisis dans le groupe formé des mammifères rongeurs omnivores de la famille des *Muridae,* la proportion de *trans*-difénacoum dans l'appât rodonticide est une proportion massique comprise entre 4 ppm et 12 ppm.

Avantageusement et selon l'invention, le difénacoum est majoritairement sous forme de *trans*-difénacoum. Avantageusement, le *trans*-difénacoum est majoritaire dans le difénacoum. L'expression selon laquelle le trans-difénacoum est majoritaire dans le difénacoum, signifie que la quantité (massique, molaire ou volumique) du *trans*-difénacoum est majoritaire -supérieure à 50 %- dans la totalité du difénacoum présent dans l'appât (sous toutes ses formes stéréo-isomères de configuration) selon l'invention.

Avantageusement et selon l'invention, l'appât rodonticide comprend majoritairement du *trans*-difénacoum dans le difénacoum, le *trans*-difénacoum étant le stéréo-isomère de configuration du difénacoum -dit homo-stéréo-isomère du difénacoum- dans lequel les deux carbones 1 et 3 du groupement 1,2,3,4-tétrahydronaphtalène sont de même configuration absolue. L'appât comprend une quantité majoritaire de *trans*-difénacoum par rapport à la quantité totale de difénacoum. L'appât comprend majoritairement du *trans*-difénacoum par rapport à l'ensemble des stéréo-isomères de configuration -*trans*-difénacoum et *cis*-difénacoum- du difénacoum. L'appât comprend du difénacoum majoritairement sous forme de *trans*-difénacoum.

Dans un appât selon l'invention :

- la quantité de *trans*-difénacoum rapportée à la somme des quantités de chacun des stéréo-isomères (i) de configuration (*trans*-difénacoum et *cis*-difénacoum) du difénacoum est supérieure à 0,5 (50 %) :

$$\frac{\text{Quantité de } trans\text{−difénacoum}}{\sum_{i}[\text{Quantité de stéréo−isomère (i) du difénacoum}]} > 0{,}5\ (50\ \%)$$

- la concentration de *trans*-difénacoum rapportée à la somme des concentrations de chacun des stéréo-isomères (i) de configuration (*trans*-difénacoum et *cis*-difénacoum) du difénacoum est supérieure à 0,5 (50 %) :

$$\frac{[trans\text{−difénacoum}]}{\sum_{i}[\text{stéréo−isomère (i) du difénacoum}]} > 0{,}5\ (50\ \%),$$

- la proportion ($p_{trans\text{-difénacoum}}$) de *trans*-difénacoum est supérieure à la proportion ($p_{cis\text{-difénacoum}}$) de *cis*-difénacoum. Dans un appât selon l'invention, la proportion de *trans*-difénacoum est de plus de 50 % par rapport au difénacoum total.

Les inventeurs ont observé que le *trans*-difénacoum et le *cis*-difénacoum ne présentent pas la même rémanence hépatique chez des rongeurs cibles nuisibles et que le *trans*-difénacoum est en fait le stéréo-isomère de configuration du difénacoum qui est de plus faible rémanence hépatique chez des rongeurs cibles, notamment chez des rongeurs cibles nuisibles. Ils ont observé que le *trans*-difénacoum d'un appât, lorsqu'il est ingéré par un rongeur cible nuisible, disparait du foie du rongeur cible nuisible ayant consommé un tel appât selon l'invention plus rapidement que le *cis*-difénacoum. Le rongeur cible nuisible mort ou vif ayant ingéré ledit appât est moins dangereux vis-à-vis de mammifères non-rongeurs et d'oiseaux consommant le rongeur cible nuisible et en particulier vis-à-vis de prédateurs (de mammifères non-rongeurs et d'oiseaux) qui consomment préférentiellement les viscères de leurs proies et en particulier leur foie.

Les inventeurs ont en outre observé qu'un tel appât selon l'invention comprenant majoritairement du *trans*-difénacoum de moindre rémanence hépatique chez des rongeurs cibles nuisibles permet en fait de lutter efficacement contre des rongeurs cibles nuisibles.

Avantageusement et selon l'invention, le *trans*-difénacoum est présent dans l'appât avec une quantité supérieure à 50 % -notamment supérieure à 70 %, de préférence comprise entre 80 % et 100 %, plus préférentiellement comprise entre 90 % et 99 %- par rapport à la quantité totale de difénacoum. Avantageusement, le *trans*-difénacoum est présent dans l'appât avec une quantité comprise entre 92 % et 98 % par rapport à la quantité totale de difénacoum. Rien n'empêche cependant que le *trans*-difénacoum soit présent dans l'appât en quantité sensiblement de l'ordre de 100 % par rapport à la quantité totale de difénacoum.

Avantageusement, l'appât peut comprendre de l'autre stéréo-isomère, dit *cis*-difénacoum, de configuration du difénacoum dans lequel les carbones 1 et 3 du groupement 1,2,3,4-tétrahydronaphtalène du difénacoum sont de configurations absolues distinctes. Avantageusement, ledit *cis*-difénacoum est présent dans l'appât avec une quantité inférieure à 50 % -notamment inférieure à 30 %, préférentiellement comprise entre 0 % et 20 %, en particulier inférieure à 10 %, plus préférentiellement de l'ordre de 5%- par rapport à la quantité totale de difénacoum. Avantageusement,

l'appât peut être exempte de *cis*-difénacoum. Avantageusement, le *cis*-difénacoum, est présent dans l'appât dans une proportion non létale pour les rongeurs cibles. Avantageusement, le *cis*-difénacoum et le *trans*-difénacoum sont présents dans l'appât avec un rapport molaire *cis*-difénacoum/*trans*-difénacoum compris dans l'intervalle ]0 ; 1/19] (0 exclu, 1/19 inclus).

L'invention vise aussi un procédé de lutte sélective contre une population de rongeurs cibles nuisibles par dissémination d'un appât susceptible d'être ingéré par les rongeurs cibles nuisibles et comprenant du *trans*-difénacoum, caractérisé en ce que l'appât comprend un excipient comestible pour des rongeurs cibles nuisibles et une proportion de *trans*-difénacoum dans l'appât qui est supérieure à une proportion minimale létale pour des femelles adultes des rongeurs cibles et inférieure à une proportion minimale létale pour des mâles adultes des rongeurs cibles, ladite proportion minimale létale pour des femelles adultes étant inférieure à la proportion minimale létale pour des mâles adultes, et en ce qu'on dissémine ces appâts en une quantité suffisante pour être létale pour des femelles adultes des rongeurs cibles.

L'invention vise donc un procédé de lutte sélective contre une population de rongeurs cibles nuisibles par dissémination d'un appât susceptible d'être ingéré par les rongeurs cibles nuisibles, ledit appât comprenant :

- du difénacoum sous forme de *trans*-difénacoum de formule 3-(biphényl-4-yl)-1-(4-hydroxycoumarin-3-yl)-1,2,3,4-tétrahydronaphtalène, dans lequel les carbones 1 et 3 du groupement 1,2,3,4-tétrahydronaphtalène sont de même configuration absolue, et ;
- un excipient comestible pour des rongeurs cibles nuisibles ;

caractérisé en ce que l'appât comprend une proportion de *trans*-difénacoum dans l'appât qui est supérieure à une proportion minimale létale pour des femelles adultes des rongeurs cibles et inférieure à une proportion minimale létale pour des mâles adultes des rongeurs cibles, ladite proportion minimale létale pour des femelles adultes étant inférieure à la proportion minimale létale pour des mâles adultes, et en ce qu'on dissémine ces appâts en une quantité suffisante pour être létale pour des femelles adultes des rongeurs cibles.

L'invention vise donc un tel procédé de lutte sélective contre une population de rongeurs cibles nuisibles par dissémination d'un appât susceptible d'être ingéré par les rongeurs cibles nuisibles, dans lequel l'appât comprend :

- du difénacoum sous forme d'un stéréo-isomère, dit *trans*-difénacoum, de configuration du difénacoum, ledit *trans*-difénacoum étant de formule 3-(biphényl-4-yl)-1-(4-hydroxycoumarin-3-yl)-1,2,3,4-tétrahydronaphtalène, les carbones 1 et 3 du groupement 1,2,3,4-tétrahydronaphtalène du *trans*-difénacoum étant de même configuration absolue, et
- un excipient comestible pour des rongeurs cibles nuisibles.

Dans un procédé de lutte sélective contre une population de rongeurs cibles nuisibles selon l'invention, on met à disposition des rongeurs cibles nuisibles une quantité d'appât susceptible d'être ingéré par les rongeurs cibles nuisibles, ladite quantité d'appât étant suffisante pour tuer des femelles de rongeurs cibles nuisibles, ledit appât comprenant du *trans*-difénacoum dans une proportion qui est supérieure à une proportion minimale létale pour des femelles adultes des rongeurs cibles et inférieure à une proportion minimale létale pour des mâles adultes des rongeurs cibles.

Dans un procédé de lutte sélective selon l'invention, on adapte la proportion de *trans*-difénacoum dans l'appât et la quantité d'appât disséminé de façon à tuer -en particulier suite à la consommation durant plusieurs jours d'au moins une partie de l'appât par les femelles- les femelles de la population de rongeurs, sans chercher à tuer les mâles de la population de rongeur.

Dans un procédé de lutte sélective selon l'invention, on dissémine une quantité d'appâts -notamment une quantité d'appâts plus faiblement dosés en *trans*-difénacoum que les appâts connus comprenant du difénacoum- et qui sont donc moins toxiques pour l'environnement et pour les animaux non-cibles susceptibles de ne consommer qu'occasionnellement et accidentellement l'appât. Dans un procédé selon l'invention, on dissémine un tel appât qui est moins toxique pour des animaux non-cibles (par exemple des prédateurs des rongeurs cibles) susceptibles de consommer des rongeurs -morts ou vifs- cibles ayant ingéré une quantité dudit appât. Le procédé selon l'invention reste cependant efficace pour lutter contre le développement des populations de rongeurs cibles nuisibles en visant sélectivement les femelles des rongeurs cibles nuisibles.

Les inventeurs ont constaté, de façon totalement surprenante et imprévisible, que la rémanence hépatique du difénacoum chez les femelles adultes de rongeurs cibles nuisibles ayant consommé un tel appât comprenant du *trans*-difénacoum -en particulier un appât faiblement dosé en *trans*-difénacoum- est supérieure à la rémanence hépatique du difénacoum chez des mâles adultes. Les femelles adultes de rongeurs cibles nuisibles présentent un temps de coagulation augmenté en comparaison du temps de coagulation des mâles adultes et sont plus sensibles que les mâles adultes à des appâts comprenant du *trans*-difénacoum -en particulier à des appâts faiblement dosés en *trans*-difénacoum-. Ils ont aussi constaté qu'il est possible de contrôler la population de rongeurs cibles nuisibles sans utiliser des doses de difénacoum qui sont toxiques pour l'environnement et les animaux non-cibles en visant sélectivement les femelles adultes ce qui limite le nombre de portées de rongeurs cibles nuisibles.

Un procédé de lutte sélective selon l'invention :

- permet un empoisonnement préférentiel -notamment un empoisonnement sélectif- des femelles adultes de rongeurs cibles nuisibles ;
- permet de limiter la quantité de difénacoum dans le corps -notamment dans le foie- des rongeurs cibles nuisibles empoisonnés (vifs ou morts) ;
- permet de limiter la quantité de difénacoum susceptible d'être ingéré par un être humain ou par un animal non-cible lors d'une consommation accidentelle d'appât,
- permet de limiter la quantité de difénacoum susceptible d'être ingérée par un prédateur -notamment par un oiseau en général et en particulier par un rapace- ou par un charognard ayant consommé un cadavre de rongeur cible nuisible préalablement empoisonné par de tels appâts.

Un procédé de lutte sélective selon l'invention permet donc de viser sélectivement les rongeurs cibles nuisibles femelles en limitant la croissance de la population de rongeurs cibles nuisibles tout en limitant les risques d'empoisonnement d'un être humain ou d'animaux non-cibles ou de prédateurs et/ou charognards des rongeurs cibles nuisibles.

Avantageusement et selon l'invention, la proportion de *trans*-difénacoum dans l'appât et la quantité d'appât disséminé sont adaptées pour atteindre :

- chez les femelles adultes des rongeurs cibles nuisibles, une quantité de *trans*-difénacoum létale pour lesdites femelles adultes, et ;
- chez les mâles adultes des rongeurs cibles nuisibles une quantité de *trans*-difénacoum non létale pour lesdits mâles adultes.

Dans une première variante d'un procédé de lutte sélective selon l'invention, on choisit la proportion de *trans*-difénacoum dans l'appât en combinaison avec la quantité d'appât disséminé de façon que des femelles adultes des rongeurs cibles consomment au cours d'une période unique de 24 heures consécutives une quantité d'appât suffisante pour être létale pour lesdites femelles adultes des rongeurs cibles consommant dudit appât.

Avantageusement dans cette variante, on dissémine une quantité d'appât suffisante pour être létale pour les femelles de rongeurs cibles nuisibles consommant dudit appât lors d'une unique période de 24 heures consécutives, mais sans chercher à tuer les mâles de la population de rongeurs. Avantageusement, dans cette variante d'un procédé de lutte sélective contre des rongeurs cibles nuisibles selon l'invention, on dissémine un appât mortel en une seule prise ou appât "*one-shot*" en anglais.

Avantageusement et selon cette variante de l'invention, une consommation unique d'appât par des femelles de rongeurs cibles nuisibles est suffisante pour entrainer la mort de femelles de rongeurs cibles nuisibles.

Dans une deuxième variante d'un procédé de lutte sélective selon l'invention, on choisit la proportion de *trans*-difénacoum dans l'appât en combinaison avec la quantité d'appât disséminé de façon que les femelles adultes de rongeurs cibles nuisibles consomment une quantité de difénacoum qui est ;

- non létale pour les femelles adultes de rongeurs cibles nuisibles consommant dudit appât pendant une période de 24 heures consécutives, et ;
- suffisante pour être létale pour les femelles adultes de rongeurs cibles nuisibles consommant dudit appât pendant plusieurs périodes de 24 heures consécutives, lesdites périodes étant successives.

Dans cette deuxième variante d'un procédé de lutte sélective selon l'invention, on dissémine une quantité d'appâts suffisante pour être létale pour les femelles de rongeurs cibles nuisibles ingérant lesdits appâts pendant au moins deux jours consécutifs mais qui est insuffisante pour provoquer la mort de rongeurs cibles nuisibles et d'animaux non-cibles par ingestion accidentelle d'une ration unique desdits appâts.

Dans cette deuxième variante d'un procédé de lutte sélective selon l'invention, la proportion de *trans*-difénacoum dans l'appât est choisie pour pouvoir atteindre chez les femelles des rongeurs cibles nuisibles ayant consommé un tel appât pendant au moins deux jours consécutifs une quantité minimale de *trans*-difénacoum létale pour lesdites femelles adultes et pour atteindre chez les mâles adultes des rongeurs cibles nuisibles ayant consommé un tel appât pendant au moins deux jours consécutifs une quantité de *trans*-difénacoum non létale pour lesdits mâles adultes.

Avantageusement et selon l'invention, la proportion de *trans*-difénacoum dans l'appât et la quantité d'appât disséminé sont choisies pour permettre à la(aux) femelle(s) adulte(s) d'ingérer une dose quotidienne massique de *trans*-difénacoum comprise entre 0,2 et 10 mg -préférentiellement entre 0,2 et 2 mg- de *trans*-difénacoum par kilogramme de femelle adulte.

Avantageusement et selon l'invention, la quantité de *trans*-difénacoum létale pour la(les) femelle(s) adulte(s) est atteinte après ingestion d'une pluralité de doses quotidiennes dudit appât par la(les) femelle(s) adulte(s). Dans un

procédé selon l'invention, on élimine progressivement les femelles des rongeurs cibles nuisibles après plusieurs ingestions successives de doses quotidiennes d'appât faiblement dosé en *trans*-difénacoum.

Avantageusement et selon l'invention, la proportion de *trans*-difénacoum dans l'appât et la quantité d'appât disséminé sont choisies pour pouvoir atteindre dans le foie des femelles adultes, au lendemain (J+4) du troisième jour (J+3) d'une période de trois jours consécutifs (J+1, J+2 et J+3), chaque jour de ladite période comprenant au moins une ingestion d'appât, une quantité de *trans*-difénacoum inférieure ou égale à 10 µg -notamment comprise entre 3 µg et 8 µg- de *trans*-difénacoum par gramme de foie desdites femelles adultes.

Avantageusement et selon l'invention, la proportion de *trans*-difénacoum dans l'appât et la quantité d'appât disséminé sont choisies pour pouvoir atteindre dans le foie des femelles adultes, au lendemain d'une troisième ingestion de trois ingestions quotidiennes successives, une quantité de *trans*-difénacoum inférieure ou égale à 10 µg de *trans*-difénacoum par gramme de foie desdites femelles adultes.

La période de trois jours consécutifs lors de laquelle un rongeur cible nuisible ingère de l'appât peut débuter à compter d'une première ingestion d'appât par un rongeur cible nuisible. Elle peut aussi débuter à compter du début de dissémination de l'appât.

Avantageusement et selon l'invention, la proportion de *trans*-difénacoum dans l'appât est adaptée pour pouvoir atteindre dans le foie des mâles adultes, au lendemain (J+4) du troisième jour (J+3) d'une période de trois jours consécutifs (J+1, J+2 et J+3), chaque jour de ladite période comprenant au moins une ingestion d'appât, une quantité de *trans*-difénacoum inférieure ou égale à 3 µg de *trans*-difénacoum par gramme de foie des mâles adultes.

Avantageusement et selon l'invention, les trois ingestions quotidiennes successives d'appât par les femelles adultes à raison de 0,2 à 10 mg de *trans*-difénacoum par ingestion et par kilogramme de femelle adulte -préférentiellement de 0,2 à 2 mg- sont adaptées pour être létales pour les femelles adultes en 4 à 8 jours à compter de la première des trois ingestions.

Avantageusement et selon l'invention, dans un procédé de lutte sélective contre une population de rongeurs cibles nuisibles, on utilise un appât selon l'invention.

Un premier aspect indépendant d'un appât et d'un procédé de lutte sélective contre une population de rongeurs cibles nuisibles selon l'invention concerne un procédé de lutte contre une population de rongeurs cibles nuisibles par dissémination d'appâts susceptibles d'être ingérés par les rongeurs cibles nuisibles et comprenant du difénacoum dans lequel le *trans*-difénacoum, qui est le stéréo-isomère de configuration du difénacoum qui est le moins rémanent dans le foie des rongeurs cibles nuisibles, est majoritaire dans le difénacoum.

Avantageusement selon ce premier aspect, on dissémine une quantité d'appât rodonticide, c'est-à-dire d'un appât comprenant une proportion majoritaire de *trans*-difénacoum, ladite quantité d'appât étant suffisante pour être rodonticide. On dissémine donc une quantité d'appât comprenant majoritairement du *trans*-difénacoum présentant chez les rongeurs cibles nuisibles une rémanence hépatique plus faible qu'un appât comprenant majoritairement du *cis*-difénacoum mais une efficacité rodonticide maintenue. Le procédé selon ce premier aspect permet donc de limiter l'empoisonnement secondaire de mammifères non-rongeurs et d'oiseaux susceptibles de s'alimenter avec des rongeurs morts ou vifs empoisonnés mais comprenant une quantité rodonticide de difénacoum. Le procédé selon ce premier aspect permet aussi de limiter un tel empoisonnement secondaire de mammifères non-rongeurs et d'oiseaux susceptibles de consommer préférentiellement les viscères -en particulier le foie- desdits rongeurs morts ou vifs empoisonnés.

Avantageusement selon ce premier aspect, il est possible que l'appât comprenne du *cis*-difénacoum, mais dans une proportion non létale pour les rongeurs cibles.

Avantageusement, selon ce premier aspect, le rapport molaire du *cis*-difénacoum et du *trans*-difénacoum dans l'appât est compris dans l'intervalle ]0 ; 1/19] (0 exclu, 1/19 inclus).

Un deuxième aspect indépendant d'un appât et d'un procédé de lutte sélective contre une population de rongeurs cibles nuisibles selon l'invention concerne un procédé de lutte contre des rongeurs cibles nuisibles dans lequel :

- on choisit un appât comprenant du difénacoum, et
- on dissémine une quantité de cet appât en combinaison avec une proportion de difénacoum dans l'appât de façon que des rongeurs cibles nuisibles consomment une quantité de difénacoum qui est :
    - ◦ non létale pour des rongeurs cibles nuisibles consommant dudit appât pendant une période de 24 heures consécutives, et ;
    - ◦ suffisante pour être létale pour des rongeurs cibles nuisibles consommant dudit appât pendant plusieurs périodes de 24 heures consécutives, lesdites périodes étant successives.

Ce deuxième aspect vise donc en particulier un procédé de lutte contre des rongeurs cibles nuisibles dans lequel on dissémine une quantité d'appât létale pour des rongeurs cibles nuisibles consommant durablement cet appât et non létale pour des rongeurs ou des animaux non cibles consommant accidentellement cet appât. On parle alors de procédé de lutte contre des rongeurs cibles nuisibles dans lequel on utilise un appât "multi-doses" ou, en anglais, "*multi-*

*feeding*". Dans un procédé selon ce deuxième aspect, une consommation d'appât par un rongeur cible nuisible pendant une durée de 24 heures est insuffisante pour entrainer la mort dudit rongeur, alors qu'une consommation répétée d'appâts pendant au moins deux jours consécutifs permet d'entrainer la mort du rongeur cible nuisible. En particulier, selon ce deuxième autre aspect, une unique consommation d'appâts est insuffisante pour entrainer la mort d'un rongeur cible nuisible, alors qu'une consommation répétée d'appâts pendant au moins deux jours consécutifs permet d'entrainer la mort du rongeur cible nuisible.

Avantageusement selon ce deuxième aspect, le difénacoum est en proportion massique inférieure à 200 ppm dans l'appât, c'est-à-dire inférieure à 200 mg de difénacoum par kilogramme d'appât. Avantageusement, la proportion massique de difénacoum est comprise entre 1 ppm et 30 ppm. Elle peut particulièrement être comprise entre 10 ppm et 100 ppm (10 mg à 100 mg de difénacoum par kilogramme d'appât), notamment comprise entre 10 ppm et 50 ppm (10 mg à 50 mg de difénacoum par kilogramme d'appât). Avantageusement, la proportion massique de difénacoum est comprise entre 5 ppm et 25 ppm, de préférence comprise entre 5 ppm et 15 ppm, plus préférentiellement de l'ordre de 15 ppm (15 mg de difénacoum par kilogramme d'appât). La proportion massique de difénacoum dans l'appât représente la masse de difénacoum rapportée à la masse de l'appât comprenant le difénacoum.

L'invention concerne également un appât rodonticide, un procédé de lutte et un procédé de lutte sélective contre des rongeurs cibles nuisibles caractérisés en combinaison par tout ou partie des caractéristiques mentionnées ci-dessus ou ci-après.

D'autres buts, caractéristiques et avantages de l'invention apparaîtront à la lecture de la description suivante et des exemples donnés à titre uniquement non limitatif et qui se réfèrent aux figures annexées, dans lesquelles :

- la figure 1 est un spectre de RMN du proton du *trans*-difénacoum ;
- la figure 2 est un spectre de RMN du proton du *cis*-difénacoum ;
- la figure 3 est une représentation graphique comparative de la rémanence hépatique du *trans*-difénacoum et du *cis*-difénacoum chez le rat ;
- la figure 4 est une représentation graphique de la rémanence hépatique (en μg/g de foie) à $J_4$ et du temps de Quick (TQ) de rats mâles ayant reçu en traitement trois doses ($J_1$, $J_2$ et $J_3$) d'une solution comprenant du *trans*-difénacoum administré à raison de 0,6 ; 1,2 ou 2,6 mg de difénacoum par kilogramme de rat ;
- la figure 5 est une représentation graphique de la rémanence hépatique (en μg/g de foie) à $J_4$ et du temps de Quick de rats femelles ayant reçu en traitement trois doses ($J_{1,}$ $J_2$ et $J_3$) d'une solution comprenant du *trans*-difénacoum administré à raison de 0,3 ; 0,6 ; 0,75 ; 1,2 ou 2,6 mg de difénacoum par kilogramme de rat.

Un appât rodonticide selon l'invention comprend du *trans*-difénacoum à titre d'agent rodonticide et au moins une substance attractive pour des rongeurs cibles nuisibles, ladite substance attractive étant apte à stimuler l'appétit d'espèces de rongeurs cibles nuisibles et l'ingestion dudit appât par les rongeurs cibles nuisibles.

On obtient du *trans*-difénacoum par toute méthode permettant la séparation des stéréo-isomères de configuration *cis*/*trans* du difénacoum. Par exemple, on connait du document EP 0 175 466 un procédé de séparation des stéréo-isomères de configurations *trans* et *cis* du difénacoum par précipitation sélective du stéréo-isomère de configuration *cis* d'une solution des stéréo-isomères de configuration dans un alcool tel que l'éthanol.

Il est aussi possible de séparer les stéréo-isomères de configuration *trans*-difénacoum et *cis*-difénacoum par chromatographie, par exemple par chromatographie liquide haute performance (HPLC), et de former un mélange enrichi en trans-difénacoum ou une composition de *trans*-difénacoum sensiblement exempte de *cis*-difénacoum. On réalise un tel enrichissement par HPLC, par exemple sur une colonne C8 (250 mm x 10 mm) maintenue à la température de 30°C. La phase mobile est formée de 80 % d'acétonitrile et de 20 % d'eau acide. Le débit de la phase mobile est maintenu à 2 mL/min. On détecte le *trans*-difénacoum et le *cis*-difénacoum par analyse spectro-photométrique à la longueur d'onde de 258 nm.

En particulier, une telle séparation des stéréo-isomères de configuration *trans*-difénacoum et *cis*-difénacoum est décrite par exemple dans la publication "Kelly M.J. et al., (1993), Journal of Chromatography, 620, 105-112. *Simple and rapid method for the determinationof the diastereoisomers of difenacoum in blood and liver using high performance liquid chromatography with fluorescence detection*". Ce document décrit aussi que les stéréo-isomères de configuration *cis* et *trans* du difénacoum se distinguent en RMN du proton (spectromètre Bruker AC 300 à 300,13 MHz dans $CDC\ell_3$), le signal correspondant au proton du carbone 1 du groupement 1,2,3,4-tétrahydronaphtalène du *trans*-difénacoum étant un triplet centré à 4,76 ppm et présentant une constante de couplage de 4,20 Hz et le signal du proton du carbone 1 du groupement 1,2,3,4-tétrahydronaphtalène du *cis*-difénacoum étant un quadruplet centré à 4,9 ppm et présentant des constantes de couplage de 11,9 et 6 Hz avec les protons du carbone 2 du groupement 1,2,3,4-tétrahydronaphtalène.

Il est aussi possible de réaliser un enrichissement en *trans*-difénacoum par chromatographie HPLC sur colonne de phase inverse INERTSIL®ODS2 d'une longueur de 150 mm et 4,6 mm de diamètre interne. La phase stationnaire inverse présente une granulométrie de 5 μm, une porosité de 80A et une surface spécifique de 500 m²/g. La phase mobile est constituée d'un mélange d'acétonitrile (62 %), d'isopropanol (3 %) et d'acétate d'ammonium (35 %) ajusté à

pH 4 avec de l'acide acétique. Le débit de la phase mobile est de 1,5 mL/min et la détection est réalisée par spectrophotométrie à 260 nm. On détecte et on collecte un stéréo-isomère de configuration *"trans"* dont le temps de rétention est de l'ordre de 5,74 min et un autre stéréo-isomère de configuration *"cis"* dont le temps de rétention est de l'ordre de 4,87 min.

La séparation des stéréo-isomères de configuration *"trans"* et *"cis"* du difénacoum peut aussi être effectuée par chromatographie liquide ultra performante (UPLC, waters) sur une chaine Acquity Waters comprenant une colonne Acquity UPLC BEH C18 de granulométrie de 1,7 µm et de dimensions 2,1 x 50 mm à 35°C. La phase mobile est formée d'un gradient d'une solution aqueuse d'acide trifluoroacétique (TFA, 0,1 %) et d'une solution de TFA 0,1 % dans l'acétonitrile. Le débit de la phase mobile est de 0,6 mL/min. Le temps de rétention du stéréo-isomère de configuration le plus retenu ("*trans*") est de 8,2 min et celui du stéréo-isomère de configuration le moins retenu ("*cis*") est de l'ordre de 7,3 min.

La séparation des stéréo-isomères de configuration *"trans"* et *"cis"* du difénacoum peut aussi être effectuée par chromatographie liquide à haute pression (HPLC) sur une colonne XBridge C18 (dimensions 4,6 x 150 mm et granulométrie de 5 µm) et avec une phase mobile formée à 45 % d'une solution aqueuse de TFA 0,1 % et 55 % d'une solution de TFA à 0,1 % dans l'acétonitrile. Le débit de la phase mobile est de 1,2 mL/min. Le temps de rétention du stéréo-isomère de configuration le plus retenu ("*trans*") est de 23,7 min et celui du stéréo-isomère de configuration le moins retenu ("*cis*") est de l'ordre de 21,0 min.

Le spectre RMN du proton du stéréo-isomère de configuration *"trans"* du difénacoum est représenté en figure 1 et le spectre RMN du proton du stéréo-isomère de configuration *"cis"* du difénacoum est représenté en figure 2. Le spectre RMN du proton du *trans*-difénacoum présente un triplet (4,5399 ppm, 4,5644 ppm et 4,5876 ppm) caractéristique du proton porté par le carbone 1 du groupement 1,2,3,4-tétrahydronaphtalène. En comparaison, le spectre RMN du proton du *cis*-difénacoum présente un quadruplet (4,8180 ppm, 4,8374 ppm, 4,8550 ppm et 4,8721 ppm) caractéristique du proton porté par le carbone 1 du groupement 1,2,3,4-tétrahydronaphtalène.

Rémanence hépatique comparée des stéréo-isomères de configuration "*trans*" et "*cis*" du difénacoum chez le rat

Á J0, on réalise un gavage *per os* de rats de laboratoire (rats Sprague Dawley, Charles River, Saint germain sur l'Arbresle, France) mâles, âgés de 8 semaines et de masse corporelle de l'ordre de 200 g avec un mélange comprenant 56 % de *trans*-difénacoum et 44 % de *cis*-difénacoum à raison de 5,2 mg de difénacoum par kilogramme de rat. On maintient les rats en vie par injection sous-cutanée quotidienne d'une solution de vitamine K à raison de 1 U par rat. Á J+1, J+3, J+5, J+7, J+10, J+14 et J+21, 4 rats sont anesthésiés par l'isoflurane puis sacrifiés, les foies sont prélevés et congelés jusqu'à analyse. Les teneurs hépatiques moyennes du *trans*-difénacoum et du *cis*-difénacoum sont analysées par HPLC et données au tableau 1 ci-après.

Tableau 1

| Teneur hépatique, µg/g | J+1 | J+3 | J+5 | J+10 | J+21 |
|---|---|---|---|---|---|
| *trans* | 4,22 | 1,05 | 0,25 | 0,1 | 0,17 |
| *cis* | 16,82 | 8,28 | 4,86 | 1,85 | 1,41 |

Dès J+1, La teneur moyenne de *trans*-difénacoum dans le foie de rats est plus faible que la teneur moyenne de *cis*-difénacoum dans les foies de rats gavés avec sensiblement la même quantité de chaque stéréo-isomère de configuration du difénacoum. Le *trans*-difénacoum présente une rémanence hépatique significativement plus faible que le *cis*-difénacoum.

On disperse par toute méthode connue en elle-même de l'homme du métier une quantité de *trans*-difénacoum dans une quantité d'une substance attractive et nourricière des rongeurs cibles nuisibles. On choisit les quantités de *trans*-difénacoum et de substance attractive de façon à former un appât rodonticide selon l'invention comprenant du *trans*-difénacoum dans une proportion supérieure à la proportion minimale létale en moins de 10 jours pour les femelles adultes des rongeurs cibles nuisibles et non létale pour les mâles adultes des rongeurs cibles nuisibles.

Une telle proportion de *trans*-difénacoum dans l'appât rodonticide est adaptée pour que les rongeurs cibles nuisibles femelles consommant l'appât rodonticide, la substance attractive et le trans-difénacoum, ingèrent une quantité de *trans*-difénacoum qui est suffisante pour l'obtention de l'effet rodonticide et la maitrise de la population de rongeurs cibles nuisibles.

1) Comparaison de l'efficacité rodonticide du *trans*-difénacoum et du *cis*-difénacoum chez le rat mâle et le rat femelle.

L'étude comparative de l'efficacité rodonticide du *trans*-difénacoum purifié et du *cis*-difénacoum purifié est

réalisée par administration au moyen d'une sonde gastrique (*per os*) :

- d'une solution de *cis*-difénacoum à un premier lot de quatre rats "Sprague Dawley" mâles de masse comprise entre 180 et 220 g, et
- d'une solution de *trans*-difénacoum à un deuxième lot de quatre rats "Sprague Dawley" mâles de masse comprise entre 180 et 220 g.

Ces solutions de *cis*-difénacoum et de *trans*-difénacoum sont obtenues par pesée de cis-difénacoum ou de trans-difénacoum et dilution dans un mélange formé de 95 % d'huile végétale et de 5 % de DMSO.

Les doses de *cis*-difénacoum et de *trans*-difénacoum utilisées sont de 2,6 mg de *cis*-difénacoum ou de *trans*-difénacoum par kilogramme de rat. La dose de 2,6 mg de *cis*-difénacoum et de *trans*-difénacoum par kilogramme de rat correspond à 4 fois la demi-dose létale ($DL_{50}$) du difénacoum pour les rats. La dose de 5,2 mg de *cis*-difénacoum ou de *trans*-difénacoum par kilogramme de rat correspond à 8 fois la demi-dose létale ($DL_{50}$) du difénacoum pour les rats.

On prélève 3 mL du sang des rats anesthésiés à l'isoflurane, dans des tubes de prélèvement comprenant du citrate (3,2 %). On centrifuge les tubes à 2000 g pendant 10 minutes et on récupère la fraction plasmatique.

On analyse le temps de coagulation (temps de Quick) du plasma au moyen du kit "Neoplastine CI Détermination of Prothrombin Time" (Diagnostica Stago, Asnière, France) par mesure sur un Thrombotimer option 2 plus (Behnk Electronik, Norderstedt, Allemagne).

La valeur normale du temps de coagulation de rats non traités est de 10 à 20 secondes.

L'administration ($J_0$) *per os* de *cis*-difénacoum à raison de 2,6 mg de *cis*-difénacoum par kilogramme de rat ou de *trans*-difénacoum à cette même posologie de 2,6 mg/kg de rat provoque une augmentation importante du temps de coagulation des rats à 1 jour après l'administration ($J_{+1}$).

Le temps de coagulation ($J_{+1}$) du sang de rats traités avec une posologie de 2,6 mg de *cis*-difénacoum ou de *trans*-difénacoum par kilogramme de rat est de 62 secondes. Par contre, l'administration *per os* de *trans*-difénacoum à cette même posologie (2,6 mg/kg) ou à une posologie double (5,2 mg/kg) provoque certes une augmentation du temps de coagulation (62 s et 84 s) à $J_{+1}$ mais conduit à une valeur de temps de Quick à $J_{+3}$ qui est faible (10 à 20 s) et de l'ordre de grandeur du temps de Quick d'un contrôle non traité. Aucune indication n'était donc donnée aux inventeurs pour choisir un appât rodonticide comprenant majoritairement du *trans*-difénacoum.

En outre, la valeur de la constante d'inhibition ($Ki_{cis}$ = 60 nM) de l'enzyme recombinante rVKORC1 par le *cis*-difénacoum est similaire à la valeur de la constante d'inhibition de la rVKORC1 par le *trans*-difénacoum ($Ki_{trans}$ = 30 nM).

2) Rémanence hépatique du *cis*-difénacoum et du *trans*-difénacoum chez le rat mâle.

Á $J_0$, on administre *per os* à sept lots de quatre rats de laboratoire (rats Sprague Dawley, Charles River, Saint germain sur l'Arbresle, France) mâles de masse comprise entre 180 et 220 g, une composition contrôle de l'état de la technique comprenant une proportion molaire de *cis*-difénacoum de 56 % et une proportion molaire de *trans*-difénacoum de 44 % à raison de 5,2 mg de difénacoum par kilogramme de rat. Á $J_{+1}$, $J_{+3}$, $J_{+5}$, $J_{+7}$, $J_{+10}$, $J_{+14}$ et $J_{+21}$ on sacrifie 4 rats. On prélève et on pèse les foies prélevés. On réalise une extraction liquide/solide du difénacoum par l'acétone. On analyse le difénacoum par HPLC sur colonne C8 (250 mm x 10 mm) maintenue à 30°C avec une phase mobile formée de 80 % d'acétonitrile et de 20 % d'eau acide. Le débit de la phase mobile est maintenu à 2 mL/min et on détecte le *trans*-difénacoum et le *cis*-difénacoum par analyse spectro-photométrique à la longueur d'onde de 258 nm. On quantifie le *trans*-difénacoum et le *cis*-difénacoum par étalonnage avec des quantités connues de *trans*-difénacoum et de *cis*-difénacoum. Les résultats sont donnés en figure 3 dans laquelle la rémanence hépatique du *trans*-difénacoum est représentée par des carrés pleins (■) et laquelle la rémanence hépatique du *cis*-difénacoum est représentée par des losanges ouverts (◊). Alors que la proportion molaire de *trans*-difénacoum administrée aux rats est de 46 %, la concentration hépatique (exprimée en $\mu$g de difénacoum par g de foie) de *trans*-difénacoum à $J_{+1}$ n'est que de l'ordre de 1 $\mu$g/g, le *trans*-difénacoum étant quasiment indétectable dès $J_{+3}$, ne subsistant que le seul *cis*-difénacoum (4 $\mu$g/g).

3) Rémanence hépatique du *trans*-difénacoum et du *cis*-difénacoum chez le rat mâle et chez le rat femelle.

On réalise une étude comparable à celle décrite au point 2) et dans laquelle on effectue une séparation et un dosage du *trans*-difénacoum et du *cis*-difénacoum à $J_{+1}$, $J_{+3}$, $J_{+5}$, $J_{+7}$, $J_{+10}$, $J_{+14}$ et $J_{+21}$ chez les rats mâles et chez les rats femelles traitées. A $J_{+1}$, la concentration de *cis*-difénacoum dans le foie des rats femelles (9,6 $\mu$g/g de foie) est sensiblement équivalente à la concentration de *cis*-difénacoum dans le foie des rats mâles (7,3 $\mu$g/g de foie). La concentration à $J_{+1}$ de *trans*-difénacoum dans le foie des rats femelles (3,3 $\mu$g/g de foie) est supérieure à la concentration de *trans*-difénacoum dans le foie des rats mâles (0,9 $\mu$g/g de foie). En outre, à $J_{+3}$, la valeur de la concentration de *trans*-difénacoum dans le foie est supérieure chez les rats femelles en comparaison avec les rats mâles. La cinétique d'élimination hépatique du *trans*-difénacoum est plus lente chez les rats femelles que chez les rats mâles en particulier

pendant les 3 premiers jours. Ainsi pour une même posologie, les concentrations hépatiques en *trans*-difénacoum sont plus importantes chez la femelle au moins jusqu'à trois jours après traitement ($J_0$).

4) Administration de *trans*-difénacoum à des rats mâles. Traitement multi-dose *("multi-feeding").*

Á compter de $J_0$, et pendant trois jours ($J_0$, $J_{+1}$ et $J_{+2}$), on administre quotidiennement à des rats mâles "Sprague Dawley" mâles de masse comprise entre 180 et 220 g, du *trans*-difénacoum à raison de 0,6 mg/kg, 1,2 mg/kg ou 2,6 mg/kg (mg de *trans*-difénacoum par kilogramme de rat mâle). Á $J_{+3}$, on mesure le temps de coagulation de ces rats mâles et on dose la concentration de *trans*-difénacoum dans le foie de ces rats mâles (exprimée en µg de *trans*-difénacoum par g de foie). Les résultats sont donnés en figure 4. L'administration pendant trois jours ($J_0$, $J_{+1}$ et $J_{+2}$) à raison d'une dose de *trans*-difénacoum par jour à des rats mâles permet une augmentation massive du temps de Quick de ces rats à $J_{+3}$ et une valeur de rémanence hépatique modérée de l'ordre de 2 µg/g de foie.

Avec une posologie de 1,2 mg/kg ou supérieure (correspondant à un appât dosé entre 12 ppm et 25 ppm de *trans*-difénacoum), l'augmentation du temps de Quick est telle que le sang du rat mâle est incoagulable. La probabilité que ce rat mâle meure d'hémorragie est donc maximale.

5) Administration de *trans*-difénacoum à des rats femelles. Traitement multi-dose ("*multi-feeding*").

A compter de $J_0$ et pendant trois jours ($J_0$, $J_{+1}$ et $J_{+2}$), on administre à des rats "Sprague Dawley" femelles à raison d'une dose par jour, du *trans*-difénacoum à raison de 0,3 mg/kg ; 0,6 mg/kg ; 0,75 mg/kg ; 1,2 mg/kg ou 2,6 mg/kg (mg de *trans*-difénacoum par kilogramme de rat femelle). A $J_{+4}$, on mesure le temps de coagulation de ces rats femelles et on dose la concentration de *trans*-difénacoum dans le foie (exprimée en µg de difénacoum par g de foie) de ces rats femelles. Les résultats sont donnés en figure 5. L'administration pendant trois jours ($J_0$, $J_{+1}$ et $J_{+2}$) à raison d'une dose de *trans*-difénacoum supérieure à 0,3 mg/kg/jour à des rats femelles permet d'atteindre à $J_{+4}$ une valeur élevée du temps de coagulation (supérieure ou égale à 500 secondes) chez ces rats femelles et une rémanence hépatique modérée et inférieure à 10 µg de *trans*-difénacoum par gramme de foie pour une dose inférieure à 2,6 mg/kg.

Avec une posologie de 0,6 mg/kg ou supérieure (correspondant à un appât rodonticide dosé entre 6 ppm et 25 ppm de *trans*-difénacoum), l'augmentation du temps de coagulation est telle que le sang des rats femelles est incoagulable. La probabilité que ces rats femelles meurent d'hémorragie est donc maximale.

Un appât rodonticide comprenant majoritairement du *trans*-difénacoum et un procédé de lutte contre des rongeurs nuisibles cibles utilisant un tel appât rodonticide selon l'invention permettent l'obtention d'un effet anticoagulant en administration répétée (multi-dose) de *trans*-difénacoum et des concentrations hépatiques très faibles chez les rats mâles, avec une posologie de 3 fois 2,6 mg/kg et chez les rats femelles avec une posologie inférieure à 2,6 mg/kg.

La concentration hépatique en *trans*-difénacoum est de l'ordre de 2 µg/g de foie de rat mâle le lendemain de la dernière prise d'appât rodonticide. Considérant que la masse d'un foie de rat est de l'ordre de 10 g, la quantité globale de *trans*-difénacoum est de 20 µg par foie et si l'on considère que le foie renferme la moitié du *trans*-difénacoum ingéré par le rongeur, un cadavre de rat contiendrait environ 40 µg de *trans*-difénacoum. En conséquence, les cadavres de rats tués par ingestion d'un appât selon l'invention présentent un risque éco-toxicologique diminué par rapport aux cadavres de rats tués par ingestion d'un appât de l'état de la technique.

A titre d'exemple, la concentration hépatique en *trans*-difénacoum de rats femelles traités avec un appât permettant l'administration de 2,6 mg de trans-difénacoum par jour et par kilogramme de rat pendant 3 jours est de l'ordre de 12 µg/g de foie. Dès lors que les prédateurs de rongeurs éliminent rapidement le *trans*-difénacoum, un cadavre de rongeur cible nuisible femelle renfermant une telle dose de *trans*-difénacoum est beaucoup moins dangereux pour l'environnement qu'un cadavre de rongeur cible nuisible femelle contenant la même quantité de stéréo-isomère de configuration *cis*-difénacoum.

Ainsi, l'usage du *trans*-difénacoum dans un appât dans lequel le *trans*-difénacoum est majoritaire est moins dangereux pour les espèces exposées au risque d'intoxication primaire (ingestion de l'appât selon l'invention par un animal non-cible -par un chien par exemple-). La consommation d'un appât selon l'invention contenant majoritairement du *trans*-difénacoum n'est susceptible de poser de problème à un animal non-cible que si ledit animal non-cible peut avoir accès à des quantités importantes dudit appât rodonticide et de façon répétée dans le temps. Le risque est donc considérablement réduit par rapport à l'utilisation du mélange commercial qui est susceptible de provoquer une intoxication mortelle chez le chien en une prise unique.

6) Traitement d'une population de rats avec un appât selon l'invention comprenant du *trans*-difénacoum à 50 ppm.

On réalise des appâts rodonticides par dispersion d'une quantité de difénacoum dans une pâte à base de farine et de matière grasse végétale et de façon que l'appât contienne 50 mg de difénacoum par kilogramme d'appât (50 ppm de difénacoum).

On réalise :

- un appât rodonticide selon l'invention comprenant majoritairement du *trans*-difénacoum (91% de *trans*-difénacoum et 9% de *cis*-difénacoum), et
- à titre de comparaison des appâts comprenant :
  - 4 % de *trans*-difénacoum et 96 % de *cis*-difénacoum, et ;
  - 38 % de *trans*-difénacoum et 62 % de *cis*-difénacoum.

Des rongeurs (10 rats Sprague Dawley (SD), dont 5 mâles et 5 femelles) sont placés dans des cages individuelles. Pendant 4 jours (J1, J2, J3 et J4), chaque rat est approvisionné avec une quantité d'appât suffisante pour satisfaire son appétit. A l'issue de ces 4 jours, une alimentation exempte d'appât est donnée. On mesure par pesée la consommation quotidienne de chaque appât. A la mort de l'animal, le foie de l'animal mort est prélevé, congelé et conservé jusqu'à l'analyse de la teneur hépatique en stéréo-isomères de configuration du difénacoum.

La consommation quotidienne moyenne d'appât par les rats et la période de survenue de la mort des animaux et la mortalité sont données au tableau 2 ci-après.

Tableau 2

| *Trans*-difénacoum / *Cis*-difénacoum | Masse moyenne d'appât quotidiennement consommé, g/jour | Survenue de la mort | Mortalité, % |
|---|---|---|---|
| 91/9 | 12,9 | J4 à J8 | 90 |
| 38/62 | 12,5 | J4 à J9 | 90 |
| 4/96 | 11,8 | J5 à J9 | 100 |

L'appât selon l'invention (91/9) est consommé par des rats avec la même quantité moyenne quotidienne que des appâts (2/98 ou 18/82) non enrichis en *trans*-difénacoum. La période de survenue de la mort des animaux ayant consommé l'appât selon l'invention est plus courte (J4-J8) que la période de survenue de la mort des animaux ayant consommé les appâts 38/62 (J4 à J9) et 4/96 (J5 à J9).

Les résultats de dosages hépatiques du trans-difénacoum et du cis-difénacoum sont présentés au tableau 3 ci-après dans lequel "*trans*-difénacoum/*cis*-difénacoum" représente la quantité (molaire ou massique) de trans-difénacoum rapportée à la quantité (molaire ou massique) de *cis*-difénacoum dans l'appât mis à disposition des rats et le terme "Résidu" représente le pourcentage de difénacoum (*trans*-difénacoum et *cis*-difénacoum) détectée dans le foie des rats et rapportée à la quantité moyenne totale de difénacoum ingérée par chaque rat.

Tableau 3

| *Trans*-difénacoum / *cis*-difénacoum | Teneur hépatique, µg/g | | Résidu, % |
|---|---|---|---|
| | *Trans*-difénacoum | *Cis*-difénacoum | |
| 91/9 | 0,76 | 0,63 | 0,4 |
| 38/62 | 0,15 | 1,54 | 0,59 |
| 4/96 | 0,01 | 2,16 | 0,7 |

La teneur moyenne en difénacoum dans le foie des rats mâles est de 8,4 µg (4,3 µg de *trans*-difénacoum et 4,1 µg de *cis*-difénacoum), 13,5 µg (1,4 µg de *trans*-difénacoum et 12,1 µg de *cis*-difénacoum) et 21,9 µg (0,2 µg de *trans*-difénacoum et 21,7 µg de *cis*-difénacoum) par rat mâle traité respectivement avec les appâts (91/9), (38/62) et (4/96). Les résidus de difénacoum dans le foie des rats mâles sont minimisés avec l'utilisation de l'appât selon l'invention.

La teneur moyenne en difénacoum dans le foie des rats femelles est de 14,9 µg (8,5 µg de *trans*-difénacoum et 6,4 µg de *cis*-difénacoum), 16,4 µg (1,1 µg de *trans*-difénacoum et 15,2 µg de *cis*-difénacoum) et 10,8 µg (10,7 µg de *cis*-difénacoum) par rat femelle traité avec respectivement les appâts (91/9), (38/62) et (4/96). Les résidus de difénacoum dans le foie des rats femelle sont minimisés avec l'utilisation de l'appât selon l'invention. Les résidus de difénacoum dans le foie des rats mâles sont aussi minimisés par rapport aux résidus de difénacoum dans le foie des rats femelles avec l'utilisation de l'appât (91/9) selon l'invention.

Un appât (91/9) comprenant majoritairement du *trans*-difénacoum permet donc de limiter les résidus de difénacoum dans le foie de rongeurs et leur toxicité secondaire vis-à-vis de prédateurs des rongeurs ou de charognards de

cadavres de rongeurs.

7) Traitement d'une population de rats avec un appât selon l'invention comprenant du *trans*-difénacoum à 15 ppm.

On réalise des appâts rodonticides par dispersion d'une quantité de difénacoum dans une pâte à base de farine et de matière grasse végétale et de façon que l'appât contienne 15 mg de difénacoum par kilogramme d'appât (15 ppm de difénacoum).

On réalise :

- un appât rodonticide selon l'invention comprenant majoritairement du *trans*-difénacoum (sensiblement 100% de *trans*-difénacoum), et
- à titre de comparaison un appât comprenant 100 % de cis-difénacoum.

Des rongeurs (10 rats Sprague Dawley (SD), dont 5 mâles et 5 femelles) sont placés dans des cages individuelles et traités comme décrit au point 6) ci-dessus. La consommation quotidienne moyenne d'appât par les rats et la période de survenue de la mort des animaux et la mortalité sont données au tableau 4 ci-après.

Tableau 4

| *Trans*-difénacoum / *Cis*-difénacoum | Masse moyenne d' appât quotidiennement consommé, g/jour | Survenue de la mort | Mortalité, % |
|---|---|---|---|
| 100/0 | 14,8 | J5 à J8 | 70 % |
| 0/100 | 13,8 | J4 à J9 | 100 % |

L'appât comprenant 15 ppm de difénacoum selon l'invention (sensiblement de l'ordre de 100 % de *trans*-difénacoum dans le difénacoum) est consommé par des rats avec la même quantité moyenne quotidienne que l'appât (100 % *cis*-difénacoum). La période de survenue de la mort des animaux ayant consommé l'appât selon l'invention est comparable (J5-J8) à la période de survenue de la mort des animaux ayant consommé l'appât faiblement dosé en *trans*-difénacoum (J4 à J9).

Un appât selon l'invention comprenant majoritairement du *trans*-difénacoum permet donc de limiter les résidus de difénacoum dans le foie de rongeurs et leur toxicité secondaire vis-à-vis de prédateurs des rongeurs ou de charognards de cadavres de rongeurs tout en conservant une efficacité rodonticide de l'ordre de 70% avec un appât faiblement dosé à 15 ppm.

## Revendications

**1.** Appât rodonticide comprenant :

- du difénacoum majoritairement sous forme de *trans*-difénacoum de formule 3-(biphényl-4-yl)-1-(4-hydroxycoumarin-3-yl)-1,2,3,4-tétrahydronaphtalène, dans lequel les carbones 1 et 3 du groupement 1,2,3,4-tétrahydronaphtalène du *trans*-difénacoum sont de même configuration absolue, et ;
- un excipient comestible pour des rongeurs cibles nuisibles ;

**caractérisé en ce qu'**il comprend une proportion de *trans*-difénacoum dans l'appât qui est supérieure à une proportion minimale de *trans*-difénacoum létale pour des femelles adultes des rongeurs cibles et inférieure à une proportion minimale de *trans*-difénacoum létale pour des mâles adultes des rongeurs cibles, ladite proportion minimale létale pour des femelles adultes étant inférieure à la proportion minimale létale pour des mâles adultes.

**2.** Appât selon la revendication 1, **caractérisé en ce que** l'excipient comestible comprend au moins un aliment choisi dans le groupe formé des graines de céréales, des moutures de graines de céréale, des farines de graines de céréale, des flocons de graines de céréale, du son de céréales, de graines non céréalières, des moutures de graines non-céréalières, des farines de graines non céréalières, des flocons de graines non céréalières, du son de plantes non céréalières.

**3.** Appât selon l'une des revendications 1 ou 2, **caractérisé en ce qu'**il présente une proportion massique de trans-difénacoum comprise entre 1 ppm et 30 ppm.

4. Procédé de lutte sélective contre une population de rongeurs cibles nuisibles par dissémination d'un appât susceptible d'être ingéré par les rongeurs cibles nuisibles, ledit appât comprenant :

   - du difénacoum majoritairement sous forme de *trans*-difénacoum de formule 3-(biphényl-4-yl)-1-(4-hydroxycoumarin-3-yl)-1 ,2,3,4-tétrahydronaphtalène, dans lequel les carbones 1 et 3 du groupement 1,2,3,4-tétrahydronaphtalène du *trans*-difénacoum sont de même configuration absolue, et
   - un excipient comestible pour des rongeurs cibles nuisibles ;

   **caractérisé en ce que** l'appât comprend une proportion de *trans*-difénacoum dans l'appât qui est supérieure à une proportion minimale létale pour des femelles adultes des rongeurs cibles et inférieure à une proportion minimale létale pour des mâles adultes des rongeurs cibles, ladite proportion minimale létale pour des femelles adultes étant inférieure à la proportion minimale létale pour des mâles adultes, et **en ce qu'**on dissémine ces appâts en une quantité suffisante pour être létale pour des femelles adultes des rongeurs cibles.

5. Procédé selon la revendication 4, **caractérisé en ce que** la proportion de *trans*-difénacoum dans l'appât et la quantité d'appât disséminé sont adaptées pour atteindre :

   - chez les femelles adultes des rongeurs cibles nuisibles, une quantité de *trans*-difénacoum létale pour lesdites femelles adultes, et ;
   - chez les mâles adultes des rongeurs cibles nuisibles une quantité de *trans*-difénacoum non létale pour lesdits mâles adultes.

6. Procédé selon l'une des revendications 4 ou 5, **caractérisé en ce qu'**on choisit la proportion de *trans*-difénacoum dans l'appât en combinaison avec la quantité d'appât disséminé de façon que des femelles adultes des rongeurs cibles consomment au cours d'une période unique de 24 heures consécutives une quantité d'appât suffisante pour être létale pour lesdites femelles adultes des rongeurs cibles consommant dudit appât.

7. Procédé selon l'une des revendications 4 ou 5, **caractérisé en ce qu'**on choisit la proportion de *trans*-difénacoum dans l'appât en combinaison avec la quantité d'appât disséminé de façon que les femelles adultes de rongeurs cibles nuisibles consomment une quantité de difénacoum qui est ;

   - non létale pour les femelles adultes de rongeurs cibles nuisibles consommant dudit appât pendant une période de 24 heures consécutives, et ;
   - suffisante pour être létale pour les femelles adultes de rongeurs cibles nuisibles consommant dudit appât pendant plusieurs périodes de 24 heures consécutives, lesdites périodes étant successives.

8. Procédé selon la revendication 7, **caractérisé en ce que** la quantité de *trans*-difénacoum létale pour la(les) femelle(s) adulte(s) est atteinte après ingestion d'une pluralité de doses quotidiennes dudit appât par la(les) femelle(s) adulte(s).

9. Procédé selon l'une des revendications 4 à 8, **caractérisé en ce que** la proportion de *trans*-difénacoum dans l'appât et la quantité d'appât disséminé sont choisies pour pouvoir atteindre dans le foie des femelles adultes, au lendemain du troisième jour d'une période de trois jours consécutifs, chaque jour de ladite période comprenant au moins une ingestion d'appât, une quantité de *trans*-difénacoum inférieure ou égale à 10 μg de *trans*-difénacoum par gramme de foie desdites femelles adultes.

10. Procédé selon l'une des revendications 4 à 9, **caractérisé en ce qu'**il est choisi pour permettre un empoisonnement préférentiel des femelles adultes de rongeurs cibles nuisibles.

11. Procédé selon l'une des revendications 4 à 10, **caractérisé en ce qu'**on utilise un appât selon l'une des revendications 1 à 3.

**Patentansprüche**

1. Nagetier-Köder, umfassend:

   - Difenacoum, mehrheitlich in Form von *trans*-Difenacoum der Formel 3-(Biphenyl-4-yl)-1-(4-hydroxycoumarin-3-yl)-1,2,3,4-tetrahydronaphtalen, in welcher die Kohlenstoffe 1 und 3 der 1,2,3,4-Tetrahydronaphtalen-Gruppe

des *trans*-Difenacoums derselben absoluten Konfiguration sind und;
- einen essbaren Hilfsstoff für Zielnagerschädlinge;

**dadurch gekennzeichnet, dass** er einen Anteil von *trans*-Difenacoum in dem Köder umfasst, der größer als ein minimaler, für erwachsene Weibchen der Zielnager letaler Anteil von *trans*-Difenacoum und kleiner als ein minimaler, für erwachsene Männchen der Zielnager letaler Anteil von tran*s*-Difenacoum ist, wobei der minimale, für erwachsene Weibchen letale Anteil kleiner als der minimale, für erwachsene Männchen letale Anteil ist.

**2.** Köder nach Anspruch 1, **dadurch gekennzeichnet, dass** der essbare Hilfsstoff mindestens ein Nahrungsmittel umfasst, das aus der Gruppe ausgewählt ist, die von den Getreidekörnern, den Getreidekörnerpulvern, den Getreidekörnermehlen, den Getreidekörnerflocken, der Getreidekleie, Nichtgetreidekörnern, den Nichtgetreidekörnerpulvern, den Nichtgetreidekörnermehlen, den Nichtgetreidekörnerflocken, der Kleie von Nichtgetreidepflanzen gebildet ist.

**3.** Köder nach einem der Ansprüche 1 oder 2, **dadurch gekennzeichnet, dass** er einen Massenanteil von trans-Difenacoum zwischen 1 ppm und 30 ppm inklusive aufweist.

**4.** Verfahren der selektiven Bekämpfung einer Population von Zielnagerschädlingen durch Ausstreuen eines Köders, der von Zielnagerschädlingen aufgenommen werden kann, wobei der Köder umfasst:

- Difenacoum, mehrheitlich in Form von *trans*-Difenacoum der Formel 3-(Biphenyl-4-yl)-1-(4-hydroxycoumarin-3-yl)-1,2,3,4-tetrahydronaphtalen, in welcher die Kohlenstoffe 1 und 3 der 1,2,3,4-Tetrahydronaphtalen-Gruppe des *trans*-Difenacoums derselben absoluten Konfiguration sind, und
- einen essbaren Hilfsstoff für Zielnagerschädlinge;

**dadurch gekennzeichnet, dass** der Köder einen Anteil von *trans*-Difenacoum in dem Köder umfasst, der größer als ein minimaler, für erwachsene Weibchen der Zielnager letaler Anteil und kleiner als ein minimaler, für erwachsene Männchen der Zielnager letaler Anteil ist, wobei der minimale, für erwachsene Weibchen letale Anteil kleiner als der minimale, für erwachsene Männchen letale Anteil ist, und dass diese Köder in einer Menge ausgestreut werden, die ausreichend ist, um für die erwachsenen Weibchen der Zielnager letal zu sein.

**5.** Verfahren nach Anspruch 4, **dadurch gekennzeichnet, dass** der Anteil von *trans*-Difenacoum in dem Köder und die Menge ausgestreuten Köders geeignet sind zu erreichen:

- bei den erwachsenen Weibchen der Zielnagerschädlinge, eine Menge von *trans*-Difenacoum, die für die erwachsenen Weibchen letal ist und;
- bei den erwachsenen Männchen der Zielnagerschädlinge, eine Menge von *trans*-Difenacoum, die für die erwachsenen Männchen nicht letal ist.

**6.** Verfahren nach einem der Ansprüche 4 oder 5, **dadurch gekennzeichnet, dass** der Anteil von *trans*-Difenacoum in dem Köder in Kombination mit der Menge ausgestreuten Köders derart ausgewählt wird, dass erwachsene Weibchen der Zielnager während eines einzigen Zeitraums von 24 aufeinanderfolgenden Stunden eine Menge des Köders aufnehmen, die ausreichend ist, um für die erwachsenen Weibchen der Zielnager, die den Köder aufnehmen, letal zu sein.

**7.** Verfahren nach einem der Ansprüche 4 oder 5, **dadurch gekennzeichnet, dass** der Anteil von *trans*-Difenacoum in dem Köder in Kombination mit der Menge ausgestreuten Köders derart ausgewählt wird, dass die erwachsenen Weibchen von Zielnagerschädlingen eine Menge Difenacoum aufnehmen, die ist;

- nicht letal für die erwachsenen Weibchen von Zielnagerschädlingen, welche den Köder während eines Zeitraums von 24 aufeinanderfolgenden Stunden aufnehmen und;
- ausreichend, um für die erwachsenen Weibchen von Zielnagerschädlingen letal zu sein, die den Köder während mehrerer Zeiträume von 24 aufeinanderfolgenden Stunden aufnehmen, wobei die Zeiträume nacheinander folgen.

**8.** Verfahren nach Anspruch 7, **dadurch gekennzeichnet, dass** die für das/die erwachsene/n Weibchen letale Menge von *trans*-Difenacoum nach Verschlucken einer Mehrzahl täglicher Dosen des Köders durch das/die erwachsene/n Weibchen erreicht wird.

**9.** Verfahren nach einem der Ansprüche 4 bis 8, **dadurch gekennzeichnet, dass** der Anteil von *trans*-Difenacoum im Köder und die Menge ausgestreuten Köders ausgewählt sind, um in der Leber der erwachsenen Weibchen am Tag nach dem dritten Tag eines Zeitraums von drei aufeinanderfolgenden Tagen, wobei jeder Tag des Zeitraums mindestens eine Ködereinnahme umfasst, eine Menge von *trans*-Difenacoum von unter oder gleich 10 μg *trans*-Difenacoum je Gramm Leber der erwachsenen Weibchen erreichen zu können.

**10.** Verfahren nach einem der Ansprüche 4 bis 9, **dadurch gekennzeichnet, dass** es ausgewählt ist, um eine bevorzugte Vergiftung der erwachsenen Weibchen von Zielnagerschädlingen zu erlauben.

**11.** Verfahren nach einem der Ansprüche 4 bis 10, **dadurch gekennzeichnet, dass** ein Köder nach einem der Ansprüche 1 bis 3 verwendet wird.

**Claims**

**1.** Rodenticidal bait comprising:

- difenacoum in a majority in the form of *trans*-difenacoum having the formula 3-(biphenyl-4-yl)-1-(4-hydroxycoumarin-3-yl)-1,2,3,4-tetrahydronaphthalene, in which carbon atoms 1 and 3 of the 1,2,3,4-tetrahydronaphthalene grouping of *trans*-difenacoum have the same absolute configuration, and;
- an excipient which is edible for target rodent pests;

**characterized in that** it comprises a proportion of *trans*-difenacoum in the bait which is greater than a minimum proportion of *trans*-difenacoum which is lethal to adult females of the target rodents and less than a minimum proportion of *trans*-difenacoum which is lethal to adult males of the target rodents, said minimum proportion which is lethal to adult females being less than the minimum proportion which is lethal to adult males.

**2.** Bait according to claim 1, **characterised in that** the excipient which is edible comprises at least one food chosen from the group formed by cereal grains, ground cereal grains, cereal grain flours, cereal grain flakes, cereal bran, non-cereal grains, ground non-cereal grains, non-cereal grain flours, non-cereal grain flakes, non-cereal plant bran.

**3.** Bait according to one of claims 1 or 2, **characterised in that** it has a proportion by mass of *trans*-difenacoum of between 1 ppm and 30 ppm.

**4.** Method of selective combating of a population of target rodent pests by scattering a bait liable to be ingested by the target rodent pests, said bait comprising:

- difenacoum in a majority in the form of *trans*-difenacoum having the formula 3-(biphenyl-4-yl)-1 -(4-hydroxycoumarin-3-yl)-1,2,3,4-tetrahydronaphthalene, in which carbon atoms 1 and 3 of the 1,2,3,4-tetrahydronaphthalene grouping of *trans*-difenacoum have the same absolute configuration, and
- an excipient which is edible for target rodent pests;

**characterised in that** the bait comprises a proportion of *trans*-difenacoum in the bait which is greater than a minimum proportion which is lethal to adult females of the target rodents and less than a minimum proportion which is lethal to adult males of the target rodents, said minimum proportion which is lethal to adult females being less than the minimum proportion which is lethal to adult males, and **in that** these baits are scattered in an amount sufficient to be lethal to adult females of the target rodents.

**5.** Method according to claim 4, **characterised in that** the proportion of *trans*-difenacoum in the bait and the amount of bait scattered are adjusted to achieve:

- in the adult females of the target rodent pests, an amount of *trans*-difenacoum which is lethal to said adult females, and;
- in the adult males of the target rodent pests, an amount of *trans*-difenacoum which is not lethal to said adult males.

**6.** Method according to one of claims 4 or 5, **characterized in that** the proportion of *trans*-difenacoum in the bait is chosen in combination with the amount of bait scattered such that adult females of the target rodents eat during a

single period of 24 consecutive hours an amount of bait sufficient to be lethal to said adult females of the target rodents which eat said bait.

**7.** Method according to one of claims 4 or 5, **characterised in that** the proportion of *trans*-difenacoum in the bait is chosen in combination with the amount of bait scattered such that the adult females of target rodent pests eat an amount of difenacoum which is;

- non-lethal to the adult females of target rodent pests which eat said bait during a period of 24 consecutive hours, and;
- sufficient to be lethal to the adult females of target rodent pests which eat said bait during several periods of 24 consecutive hours, said periods being successive.

**8.** Method according to claim 7, **characterised in that** the amount of *trans*-difenacoum which is lethal to the adult female(s) is achieved after ingestion of a plurality of daily doses of said bait by the adult female(s).

**9.** Method according to one of claims 4 to 8, **characterised in that** the proportion of *trans*-difenacoum in the bait and the amount of bait scattered are chosen in order to be able to achieve in the liver of the adult females, on the day following the third day of a period of three consecutive days, each day of said period comprising at least one ingestion of bait, an amount of *trans*-difenacoum of less than or equal to 10 $\mu$g of *trans*-difenacoum per gram of liver of said adult females.

**10.** Method according to one of claims 4 to 9, **characterised in that** it is chosen in order to allow preferential poisoning of the adult females of target rodent pests.

**11.** Method according to one of claims 4 to 10, **characterized in that** a bait according to one of claims 1 to 3 is used.

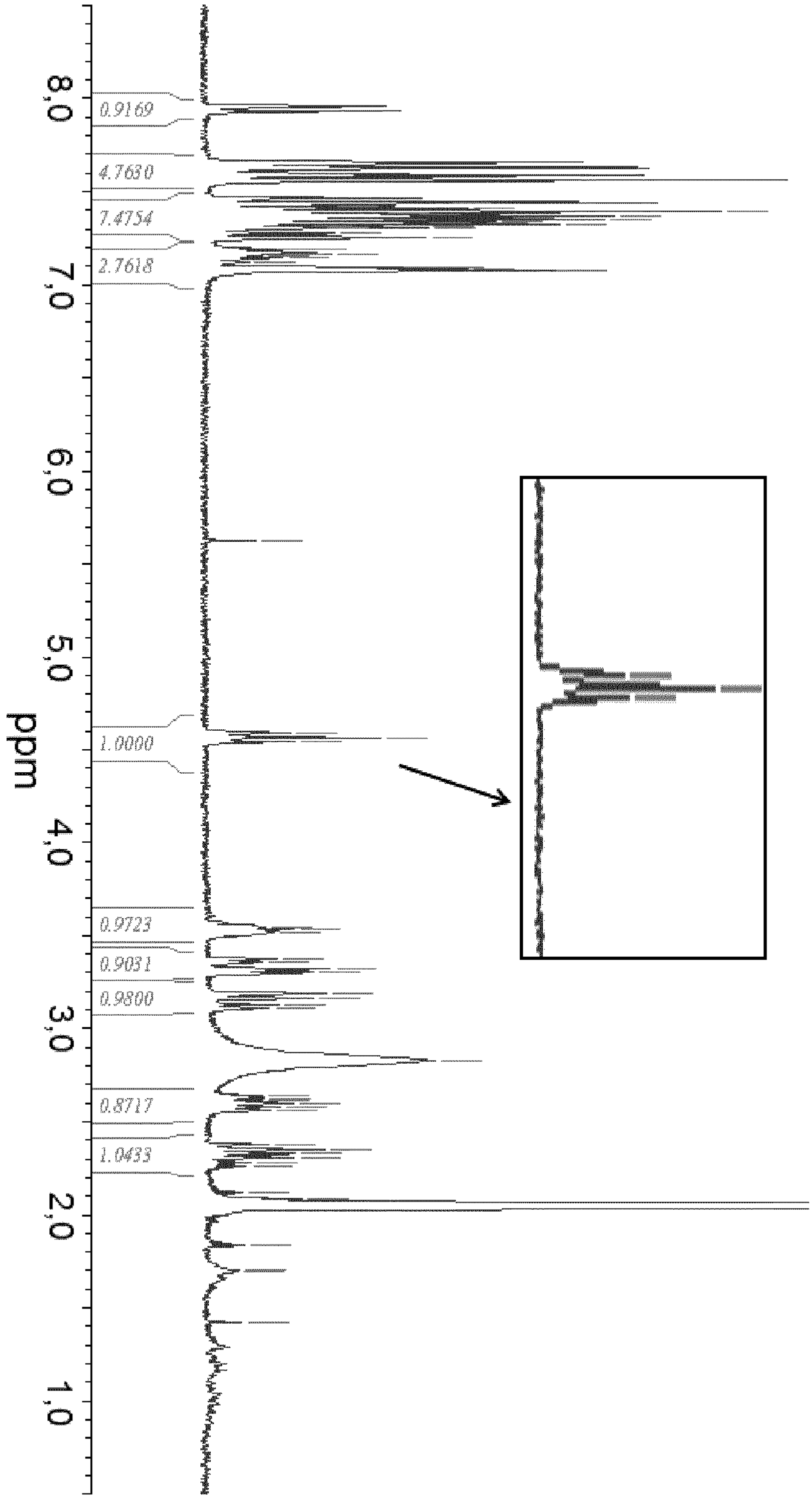
0.9169
4.7630
7.4754
2.7618
1.0000
0.9723
0.9031
0.9800
0.8717
1.0433
8,0
7,0
6,0
5,0
4,0
3,0
2,0
1,0
ppm

Fig 1

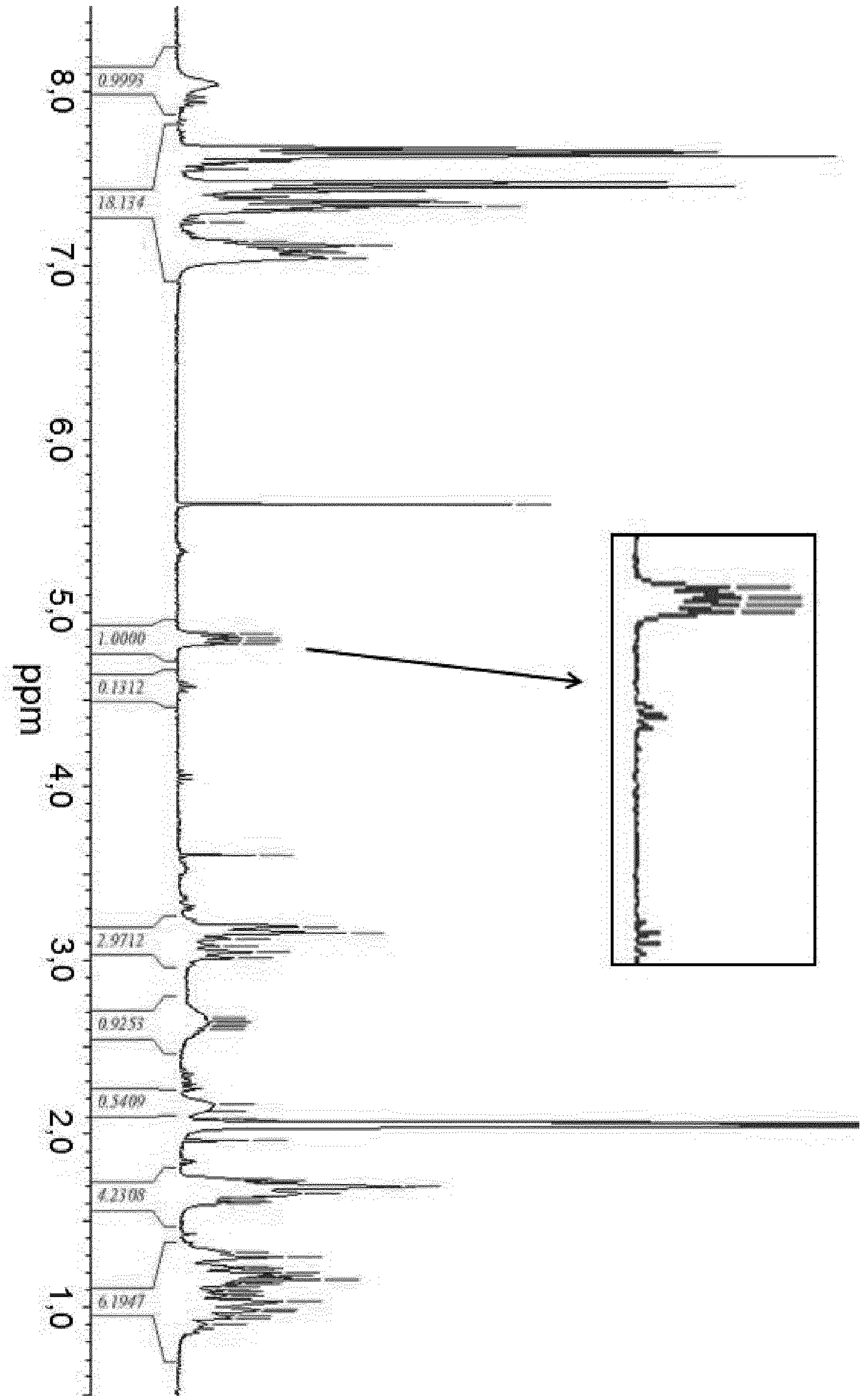
8,0
7,0
6,0
5,0
4,0
3,0
2,0
1,0
ppm
0.9993
18.134
1.0000
0.1312
2.9712
0.9255
0.5409
4.2308
6.1947

Fig 2

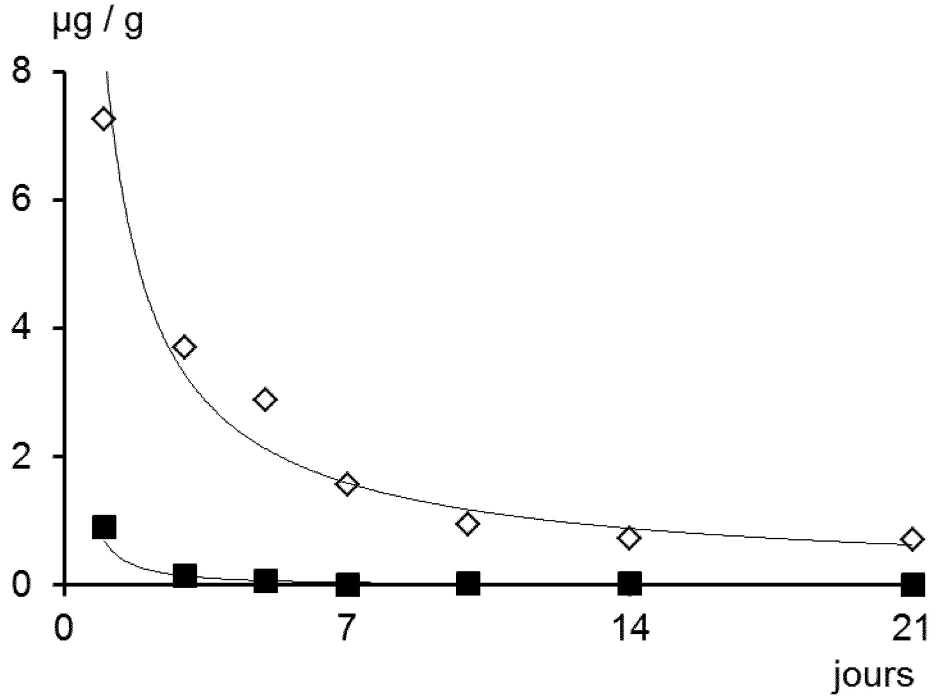
µg / g
8
6
4
2
0
0
7
14
21
jours

Fig 3

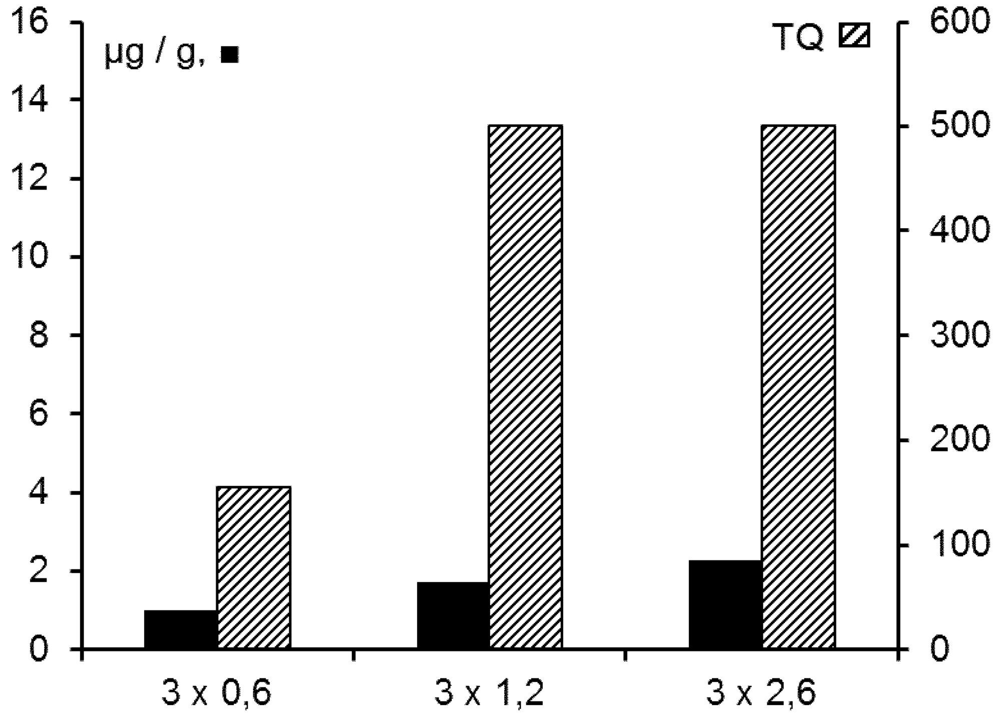
16
14
12
10
8
6
4
2
0
µg / g,
TQ
600
500
400
300
200
100
0
3 x 0,6
3 x 1,2
3 x 2,6

Fig 4

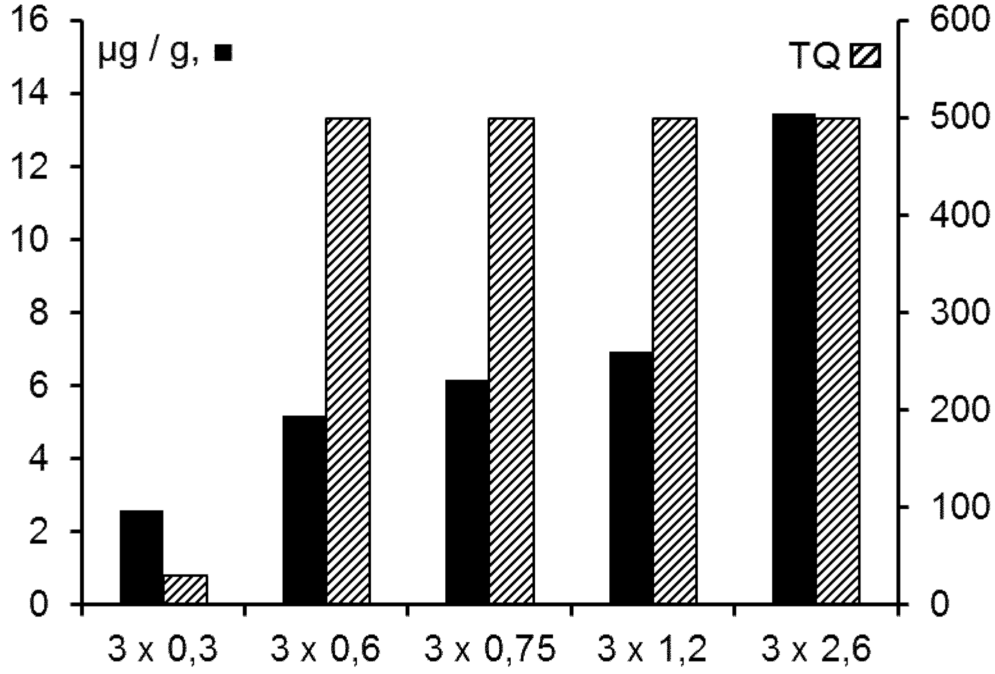
16
14
12
10
8
6
4
2
0
µg / g,
TQ
600
500
400
300
200
100
0
3 x 0,3
3 x 0,6
3 x 0,75
3 x 1,2
3 x 2,6

Fig 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 2090164 A
- WO 9301712 A
- EP 0175466 A


### Littérature non-brevet citée dans la description


- **KELLY M.J. et al.** *Journal of Chromatography,* 1993, vol. 620, 105-112